# FASCICULE DE BREVET EUROPEEN

(11) **EP 0 974 179 B1**
(45) Date de publication et mention de la délivrance du brevet: **16.01.2002**
(21) Numéro de dépôt: 98920574.5
(22) Date de dépôt: 07.04.1998
(51) Int. Cl.: H02G 15/18, H02G 1/14

(54) **DISPOSITIF DE JONCTION DE CABLE ELECTRIQUE**
VORRICHTUNG ZUM VERBINDEN ELEKTRISCHER KABEL
CONNECTING CORD JUNCTION

(30) Priorité: 07.04.1997 FR 9704198
(43) Date de publication de la demande: 26.01.2000
(73) Titulaire: CABLES PIRELLI, F-94410 Saint Maurice (FR)
(72) Inventeur: OSMANI, Samir, F-59240 Dunkerque (FR); TOGNALI, Stéphane, F-94350 Villiers Sur Marne (FR); VANDAELE, Jérôme, F-60650 Hodenc-en-Braye (FR); GLOANEC, Daniel, F-75018 Paris (FR); RIBOULET, Gilles, F-77420 Champs-sur-Marne (FR)
(74) Mandataire: Casalonga, Axel
(86) Numéro de dépôt international: FR9800694
(87) Numéro de publication internationale: WO9845918

(56) Documents cités:
- WO-A-94/23480
- FR-A- 2 724 444
- GB-A- 2 099 638
- US-A- 5 467 515
- C BLES PIRELLI: "LABORATOIRES ET INDUSTRIE Inauguration d'une nouvelle ligne de production "Elaspeed" à Marne-la-Vallée" REVUE G N RALE DE L' LECTRICIT , no. 8, septembre 1994, pages 62-63, XP000469739 PARIS

## Description

La présente invention a pour objet un dispositif de jonction pour câble électrique ou tête de câble électrique, comprenant au moins un élément support rigide tubulaire sur lequel est initialement monté un manchon pré-expansé rétractable à froid, l'élément support tubulaire étant extrait automatiquement par action sur un moyen d'immobilisation déverrouillable. Le support ainsi défini est de ce fait dit "à extraction automatique commandée", et on sait que pour mettre en place sur une jonction de deux câbles électriques ou sur la tête d'un câble un manchon de protection expansé rétractable à froid, il est nécessaire que le diamètre de ce manchon soit suffisant pour le mettre en place correctement sur le ou les câbles, le manchon étant capable de se rétracter afin d'enserrer la jonction à protéger.

A cet effet, on utilise habituellement un tube rigide qui sert de support au manchon pré-expansé et qui facilite sa mise en place, le tube devant être ensuite extrait pour permettre la contraction du manchon, lequel peut être constitué d'un caoutchouc synthétique à base de silicone.

Cette opération d'extraction n'est pas aisée à réaliser en raison des contraintes de compression radiale exercées par le manchon.

On utilise dans certaines réalisations un support pour le manchon pré-expansé, pré-découpé selon un tracé hélicoïdal, une tirette permettant de dévider le matériau du support selon la découpe hélicoïdale. Le support peut alors s'échapper de l'intérieur du manchon quand on exerce une traction à l'extrémité de la tirette. Ces supports à tirette sont cependant coûteux et leur extraction est relativement longue.

La demande de brevet français 2 724 444 (ALCATEL) décrit un dispositif de jonction pour câble électrique, comportant des éléments rigides tubulaires de forme cylindrique munis d'un film de glissement qui permet leur extraction lorsqu'un effort axial est exercé sur eux. On utilise comme film de glissement un film souple et résistant à faible coefficient de frottement tel qu'un film à base de silicone. Au fur et à mesure du dégagement de l'élément tubulaire, le manchon pré-expansé se rétracte sur la jonction, le film de glissement se retournant sur lui-même.

Le brevet US n° 5 467 515 (LUZZI) montre l'utilisation d'un dispositif de jonction rétractable à froid, dans lequel un mandrin rigide de forme conique peut être extrait par la pression exercée sur la surface conique par le manchon pré-expansé qui l'enserre. Pour faciliter l'extraction, ce document précise que la surface externe de l'élément rigide conique est lubrifiée. Pour maintenir provisoirement en position le support conique par rapport au manchon rétractable, il est prévu un dispositif de verrouillage extérieur.

Dans la pratique, ces différentes solutions ne donnent pas entièrement satisfaction. C'est ainsi que les films de glissement préconisés dans le document précité sont de réalisation complexe et relativement fragile. De plus, il est difficile d'éviter tout déplacement du manchon lors du retrait du ou des éléments support tubulaires.

Pour assurer par ailleurs une efficacité de protection de la jonction par le manchon rétracté, la pression exercée par celui-ci sur l'ensemble de la jonction doit être importante. Il en résulte des efforts de compression élevés sur les éléments support du manchon rétractable. La forme conique des éléments support à surface lubrifiée peut être telle que la conicité entraîne effectivement l'extraction du support par la poussée du manchon rétractable. Cette forme conique peut cependant ne pas être souhaitée car elle entraîne également une déformation qui peut être trop importante du manchon rétractable à l'endroit du diamètre maximum du support conique. A cet endroit, le manchon revient donc plus difficilement en place, la mémoire élastique du matériau étant plus faible lorsque la déformation est plus forte. Or, c'est précisément aux extrémités du manchon qu'est réalisée l'étanchéité de la jonction. Le serrage doit donc être important à cet endroit.

De plus, la pression exercée par le manchon rétractable est parfois telle que la surface interne de celui-ci vient par endroit en contact direct avec la surface externe de l'élément support malgré le lubrifiant interposé, ce qui ne permet alors plus l'extraction autonome de l'élément support.

L'invention a pour objet de diminuer ou éliminer ces inconvénients, de permettre une extraction autonome commandée par l'élément support du manchon pré-expansé rétractable à froid qui limite la déformation du manchon et qui fonctionne parfaitement malgré la très forte pression exercée par le manchon rétractable sur son support.

L'invention a également pour objet une jonction qui présente après extraction du support du manchon rétractable, d'excellentes qualités d'isolation électrique.

Enfin, l'invention a pour objet un dispositif de jonction dont les caractéristiques de fonctionnement restent constantes même pour une durée de stockage de plusieurs années.

L'invention a également pour objet un dispositif de jonction dans lequel la pression exercée par le manchon rétracté après la pose du dispositif de jonction est supérieure à 1 bar (10⁵ Pa) et de préférence supérieure à 4 bars (4.10⁵ Pa), pouvant aller jusqu'à 15 bars (15.10⁵ Pa) de façon à assurer une excellente protection et une suppression certaine de toute poche d'air qui pourrait être formée lors de la rétraction du manchon.

Le dispositif de jonction de câble électrique selon l'invention comprend au moins un élément support rigide tubulaire, lubrifié sur la majeure partie de sa surface extérieure, un manchon pré-expansé, rétractable à froid, enserrant ledit élément support sur la majeure partie de sa longueur et sur son extrémité interne, et un moyen d'immobilisation déverrouillable, maintenant ledit élément support immobilisé par rapport au manchon pré-expansé.Selon l'invention, ledit élément support est recouvert sur la majeure partie de sa surface extérieure d'une graisse non fluante sous l'action de la pression exercée par le manchon rétractable, ladite graisse étant à base de silicone ou de polyalkylène glycol avantageusement additionnée d'une charge, comprenant par exemple du talc, dans des proportions de 15 à 35% en poids et contenant de préférence au moins un additif de tenue à la pression tel que du nitrure de bore, dans des proportions de 2 à 10% en poids.

La graisse utilisée est choisie de façon à présenter une tenue à la pression suffisante pour résister aux efforts importants exercés par le manchon rétractable pendant la durée de stockage du dispositif c'est-à-dire au moins six mois et jusqu'à environ trois ans.Elle ne doit donc pas présenter de fluage notable sous la haute pression exercée par le manchon.La graisse utilisée doit en outre former un film lubrifiant continu sur toute la surface de l'élément support malgré la pression exercée par le manchon, laquelle peut être de l'ordre de 5 à 6 bars (5.10⁵ à 6.10⁵ Pa) et jusqu'à 15 bars (15.10⁵ Pa).

Pour obtenir ces effets techniques a priori contradictoires, la graisse utilisée est une pâte de viscosité comprise entre 100 et 400 000 centistokes à base de silicone tel que du polydiméthylsiloxane ou de polyalkylèneglycol tel que du polyéthylèneglycol, de préférence renforcée par une charge constituée par exemple de talc éventuellement additionné de silice dans des proportions de 15 à 45% en poids et pouvant contenir en outre un additif de tenue à la haute pression constitué par exemple de nitrure de bore dans des proportions de 2 à 10% en poids.

Une telle graisse présente une excellente hydrophobie et de bonnes propriétés d'isolation électrique.Elle a également une excellente tenue en température et une grande inertie chimique.

Le choix de la base de la graisse est lié à la nature du matériau du manchon expansé.

Avec un manchon en silicone, on utilisera de préférence une graisse à base de polyalkylèneglycol. Si le manchon est en un autre élastomère, par exemple un terpolymère éthylène-propylène-diène, on pourra au contraire avantageusement utiliser une graisse à base de silicone. La viscosité de la graisse est choisie d'autant plus importante que la pression exercée par le manchon est importante.

La charge utilisée, par exemple le talc, permet d'augmenter la consistance de la graisse de façon qu'un film de lubrifiant subsiste entre le manchon et l'élément support. Si la quantité de charge est trop importante, la graisse devient trop collante. Lorsque l'on utilisera uniquement une telle charge, celle-ci peut être présente dans des proportions de 15 à 35% en poids.

L'additif de tenue à la pression a pour fonction d'assurer un glissement convenable. Si l'on utilise uniquement cet additif, les proportions à respecter sont supérieures à 15% en poids et de préférence de l'ordre de 20 à 40% en poids.

En définitive, la composition de la graisse utilisée répond aux critères suivants :
- Base silicone ou polyalkylèneglycol (de viscosité comprise entre 100 et 400 000 centistokes) 60 - 80% en poids
- Silice pyrogénée (épaississant) 0 - 10% en poids
- Talc 15 - 35% en poids
- Nitrure de bore (additif de tenue haute pression) 0 - 10% en poids

Le moyen d'immobilisation déverrouillable est de préférence tel qu'il crée une zone de frottement localisé entre l'élément support et le manchon rétractable et provoque, lorsqu'il est déverrouillé, une rétraction localisée du manchon au voisinage de l'extrémité interne de l'élément support, lequel est alors poussé axialement vers l'extérieur. La graisse définie précédemment assure une lubrification suffisante pour que cette poussée provoque effectivement l'extraction autonome de l'élément support et ce, quelle que soit la forme de l'élément support.

L'élément support comprend généralement, pour une jonction de deux câbles, deux demi supports rigides tubulaires disposés à l'intérieur du manchon pré-expansé avec leurs extrémités internes en regard.

Les deux demi supports peuvent être de dimensions égales ou inégales.

Les demi supports peuvent être de forme cylindrique et de section circulaire ou elliptique.Ils peuvent être,au moins en partie, de forme conique et de section circulaire ou elliptique, la conicité étant orientée de façon telle que le diamètre du demi support soit plus faible vers l'intérieur de la jonction.

Le moyen d'immobilisation déverrouillable comprend de préférence un moyen de solidarisation mutuelle temporaire des deux demi supports qui peut être réalisé de différentes manières.

Dans une première variante,le moyen de solidarisation mutuelle temporaire des deux demi supports comprend une sangle interne dont les extrémités ressortent à l'extérieur par des orifices prévus dans les demi supports.

Dans une deuxième variante, le moyen de solidarisation mutuelle temporaire des deux demi supports comprend au moins une patte faisant saillie depuis le bord interne d'un demi support, inclinée par rapport à l'axe du demi support et coopérant avec un évidement de forme correspondante pratiqué sur le bord interne de l'autre demi support, de façon qu'une rotation relative des demi supports l'un par rapport à l'autre entraine leur écartement.

Dans une autre variante, le moyen de solidarisation mutuelle temporaire des deux demi supports est réalisé par une solidarisation frangible des bords internes des deux demi supports.

On peut également prévoir sur l'un au moins des demi supports, au voisinage de son bord interne, une portion déchirable par traction sur un lien s'étendant jusqu'à l'extérieur, la surface extérieure de cette portion déchirable étant dénuée de graisse.Cette portion non lubrifiée suffit pour immobiliser le demi support concerné malgré la poussée exercée par le manchon rétractable.

Le même effet est obtenu lorsque chaque demi support comprend un élément annulaire de friction en contact avec le manchon pré-expansé, le dit élément pouvant être extrait par traction sur un lien s'étendant jusqu'à l'extérieur.

Il est important pour la qualité de protection de la jonction, que le manchon rétracté soit parfaitement centré sur la jonction. Or, on comprend que le déplacement du ou des demi support lors de leur extraction, risque de modifier un centrage effectué avant la rétration.Il est donc utile de prévoir en outre des moyens de centrage précis du manchon sur la jonction.

A cet effet, le dispositif de jonction selon l'invention comprend un moyen supplémentaire d'immobilisation de l'un des demi supports par rapport au manchon pré-expansé, l'effet de ce moyen supplémentaire pouvant être supprimé après extraction de l'autre demi support et vérification du centrage de la jonction.

Dans une variante, il est prévu au moins une sangle externe longitudinale reliant entre eux les bords externes des demi supports et un moyen de bridage amovible fixant les dites sangles externes sur le manchon préexpansé et définissant des portions de longueur inégale sur les sangles.

Dans une autre variante, au moins une sangle externe longitudinale relie entre eux les bords externes des demi supports et au moins une sangle de renvoi est fixée d'un côté au bord externe d'un demi support et de l'autre côté sur la surface extérieure du manchon pré-expansé,au voisinage du centre du dispositif de jonction.

Dans une autre variante il est prévu au moins une sangle externe longitudinale reliant entre eux les bords externes des demi supports et un moyen amovible de frottement localisé disposé sur chaque demi support et en contact direct avec le manchon rétractable.

Dans tous les cas, l'élément support comporte de préférence des moyens pour le séparer du câble électrique après son extraction du manchon rétractable.

Par exemple, l'élément support est prédécoupé selon une incision hélicoidale ou encore, découpé en deux parties selon une génératrice.

L'élément support peut également présenter, sur au moins une génératrice, une ou plusieurs zones de rupture frangibles.

L'invention sera bien comprise à l'étude de quelques modes de réalisation particuliers pris à titre d'exemples nullement limitatifs et illustrés par les figures annexées, sur lesquelles :
la figure 1 représente schématiquement et partiellement en coupe un mode de réalisation d'un dispositif de jonction selon l'invention utilisant deux demi supports de forme cylindrique;
la figure 2 est une vue extérieure en élévation d'un demi support utilisé dans le dispositif de la figure 1;
la figure 3 est une vue en coupe selon III-III du demi support de la figure 2;
la figure 4 est une vue extérieure en élévation d'un autre mode de réalisation d'un demi support pouvant être utilisé dans un dispositif de jonction selon l'invention;
la figure 5 est une vue partiellement en coupe du dispositif de jonction de la figure 1, montrant l'état du dispositif au cours de la rétraction du manchon pré-expansé;
la figure 6 est une vue partiellement en coupe d'un autre mode de réalisation d'un dispositif de jonction selon l'invention, utilisant cette fois deux demi supports de forme conique;
la figure 7 est une vue partiellement en coupe du dispositif de jonction de la figure 6, montrant l'état du dispositif au cours de la rétraction du manchon pré-expansé;
la figure 8 est une vue partiellement en coupe d'une autre variante du dispositif de jonction selon la présente invention, utilisant cette fois deux demi supports de forme partiellement tronconique et partiellement cylindrique;
la figure 9 illustre un mode de réalisation des moyens d'immobilisation déverrouillables;
la figure 10 illustre un autre mode de réalisation des moyens d'immobilisation déverrouillables;
la figure 11 illustre encore une autre variante des moyens d'immobilisation déverrouillables;
les figures 12 et 13 illustrent deux variantes de supports permettant l'extraction ultérieure desdits supports après rétraction du manchon pré-expansé;
la figure 14 est une vue en coupe d'un support selon une autre variante;
la figure 15 est une vue en coupe partielle montrant un dispositif de jonction selon l'invention, comportant des moyens de centrage;
les figures 15a à 15h illustrent l'utilisation du dispositif de la figure 15;
la figure 16 est une vue en coupe partielle d'un dispositif de jonction comportant des moyens de centrage différents de ceux du dispositif de la figure 15;
la figure 17 est une vue partiellement en coupe d'un dispositif de jonction selon l'invention, comportant également des moyens de centrage comme dans les dispositifs illustrés sur les figures 15 et 16 mais selon une autre variante;
et la figure 18 est une vue en coupe de l'une des bagues de verrouillage visibles sur la figure 17.

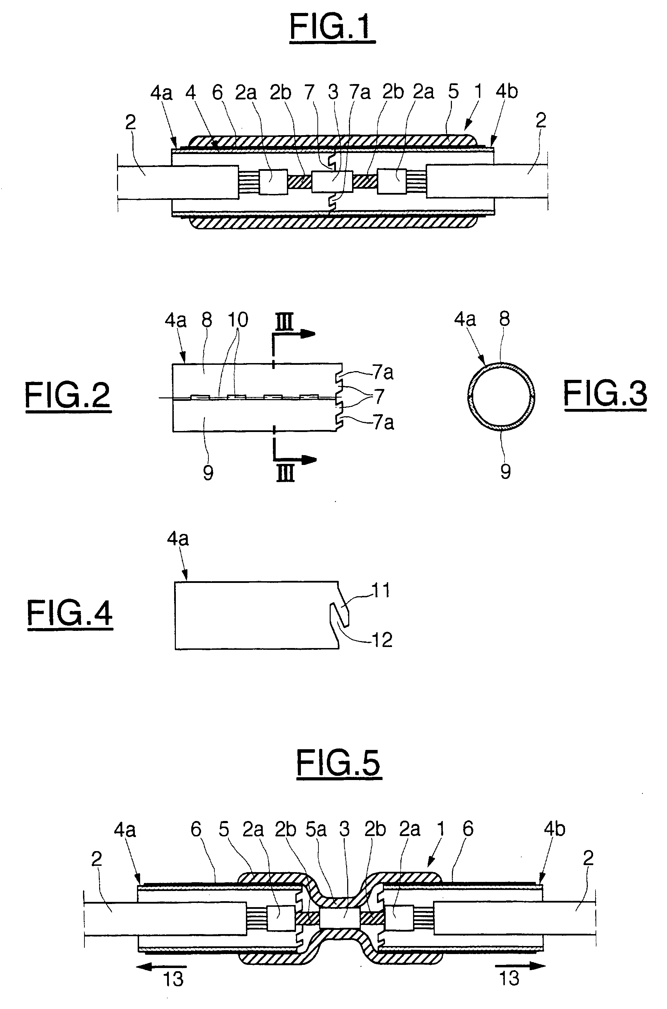

Tel qu'il est illustré sur les figures 1 à 3, le dispositif de jonction de câbles électriques selon l'invention référencé 1 dans son ensemble, est destiné à coopérer avec deux câbles électriques 2 dont les extrémités 2a ont été dénudées, les parties dénudées 2b ayant été réunies par un connecteur 3. Le dispositif de jonction 1 selon l'invention a pour objet de protéger la jonction et le connecteur 3.

A cet effet, le dispositif 1 qui a été enfilé sur l'extrémité de l'un des câbles électriques 2 avant la réalisation de la jonction, est ensuite placé en position centrée par rapport au connecteur 3 comme illustré sur la figure 1.

Le dispositif de l'invention comprend un élément support 4 tubulaire rigide et constitué dans l'exemple illustré sur la figure 1 par deux demi supports 4a, 4b, de dimensions identiques et de forme générale cylindrique à section circulaire.

Un manchon tubulaire 5 pré-expansé et capable de se rétracter à froid enserre l'élément support tubulaire 4 sur la majeure partie de sa longueur. Le manchon 5 peut être réalisé en élastomère à base de silicone. Il peut également être réalisé en un autre matériau élastomère ou en tout autre matériau rétractable à froid, présentant les caractéristiques mécaniques et électriques convenables pour protéger ultérieurement la jonction et les extrémités des deux câbles électriques 2. On notera qu'afin d'obtenir une bonne protection ultérieure de la jonction et des extrémités des câbles électriques 2, il est important que la pression exercée sur le connecteur 3 après rétraction du manchon 5 soit importante. Le dispositif selon l'invention permet en particulier d'utiliser des manchons rétractables 5 exerçant sur le support 4 une pression supérieure à 1 bar (10⁵ Pa) ou même supérieure à environ 4 bars (4.10⁵ Pa), pouvant aller jusqu'à 15 bars (15.10⁵ Pa).

L'élément support 4 est recouvert sur la partie de sa surface extérieure enserrée par le manchon 5 d'une pellicule de graisse non fluante présentant la composition et les caractéristiques qui ont été indiquées précédemment. La graisse est de préférence à base de silicone lorsque le manchon est un autre élastomère et à base de glycol lorsque le manchon est en silicone. Cette pellicule de graisse a été représentée de manière exagérée en ce qui concerne son épaisseur sous la forme d'un trait plein référencé 6 sur la figure 1. L'épaisseur de la pellicule de graisse dépend de sa viscosité et de la pression exercée par le manchon 5.

Les bords internes des deux demi supports 4a, 4b, c'est-à-dire les bords qui sont enserrés par le manchon 5, comprennent une pluralité de pattes en saillie 7 toutes inclinées par rapport à l'axe du support tubulaire 4 et coopérant avec des évidements 7a de forme correspondante pratiqués sur le bord interne de l'autre demi support, comme on peut le voir également sur la figure 2.

Grâce à cette structure, les deux demi supports 4a, 4b sont maintenus emboîtés l'un dans l'autre par leurs bords internes respectifs de façon que l'ensemble formé par les deux demi supports 4a, 4b enserrés par le manchon pré-expansé 5, constitue un ensemble monobloc qui peut être aisément stocké avant utilisation. De plus, au moment de l'utilisation, il suffit alors d'exercer une rotation relative d'un demi support, par exemple 4a par rapport à l'autre demi support, par exemple 4b, pour provoquer, grâce à l'inclinaison des pattes 7 et des évidements 7a, un écartement selon l'axe du dispositif des deux demi supports 4a, 4b, l'un par rapport à l'autre.

Les deux demi supports 4a, 4b sont identiques et seule la description de l'un d'entre eux (4a) illustrée sur la figure 2 sera faite ici. Le demi support 4a est réalisé par l'assemblage de deux coques semi cylindriques 8 et 9, représentant chacune la moitié du demi support 4a. L'assemblage des deux coques 8 et 9 est fait selon une génératrice parallèle à l'axe au moyen d'une pluralité de créneaux 10 pratiqués respectivement et alternativement le long des génératrices en contact de coques 8 et 9, comme on peut le voir sur la figure 2. Les créneaux 10 sont en outre réalisés de façon telle qu'aucune saillie n'apparaisse sur la surface extérieure du demi support 4a comme on peut le voir sur la figure 3, et ce de façon à ne gêner en aucune manière l'extraction des demi supports 4a, 4b par glissement lubrifié de la surface extérieure des demi supports 4a, 4b par rapport à la surface intérieure du manchon 5 lors de la rétraction de ce dernier.

La figure 4 montre une variante de structure d'un demi support 4a, dans laquelle deux pattes 11 diamétralement opposées sont prévues sur le bord interne de chaque demi support 4a, lequel présente également un évidement 12 de forme complémentaire destiné à recevoir la patte 11 correspondante du demi support en regard 4b. Les pattes 11 sont plus longues que les pattes 6 de la variante illustrée sur la figure 2. Leur effet est cependant analogue et elles permettent lors d'une rotation relative des deux demi supports 4a, 4b, d'obtenir un écartement entre les demi supports.

La figure 5 montre l'utilisation du dispositif de l'invention après qu'une rotation relative ait été effectuée des deux demi supports 4a et 4b l'un par rapport à l'autre entraînant comme il vient d'être dit un écartement au voisinage de la partie centrale du dispositif de jonction, c'est-à-dire à l'endroit du connecteur 3. Dès qu'un léger écartement a été obtenu, le manchon pré-expansé 5 se rétracte en venant enserrer dans sa partie centrale Sa le connecteur 3. Cette rétraction localisée du manchon 5 entraîne une poussée axiale du manchon 5 sur les bords internes respectifs des deux demi supports 4a, 4b qui sont donc extraits automatiquement en se déplaçant dans le sens des flèches 13 visibles sur la figure 5. Cet effet est obtenu à la fois par la poussée exercée par le manchon 5 et grâce à l'existence du film de graisse dont les caractéristiques sont telles qu'elle forme effectivement un film lubrifiant continu sur toute la surface des demi supports 4a, 4b et ce malgré la pression importante exercée par le manchon 5. Cette extraction autonome est ainsi obtenue malgré la forme cylindrique des demi supports 4a, 4b.

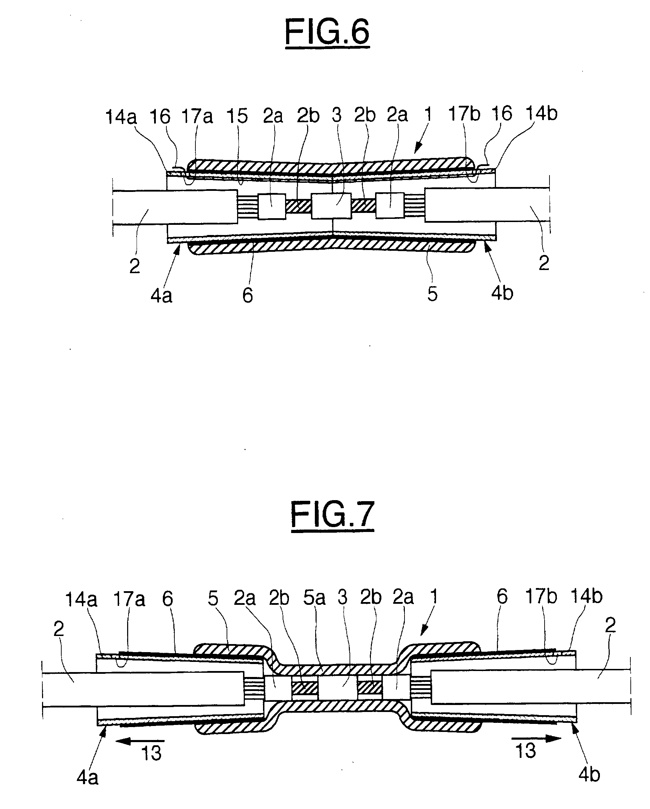

La variante illustrée sur la figure 6 se différencie du mode de réalisation des figures précédentes par le fait que les deux demi supports 4a, 4b présentent une légère conicité vers l'intérieur de la jonction, leur diamètre étant légèrement plus faible à l'endroit de leur bord interne où ils viennent en contact, par rapport à leur bord externe où le diamètre est plus important. Chacun des demi supports 4a, 4b présente au voisinage de son bord externe une portion 14a, 14b qui dépasse le bord externe correspondant du manchon 5. Les deux demi supports 4a, 4b sont maintenus l'un contre l'autre dans le dispositif 1 au moyen d'une sangle interne 15 longitudinale orientée selon l'axe du dispositif 1 et dont les extrémités 16 ressortent à l'extérieur des demi supports 4a, 4b par des orifices 17a, 17b. Les extrémités de la sangle 15 sont profilées sous la forme de languettes permettant de les saisir aisément lors de l'utilisation du dispositif.

Comme dans le mode de réalisation illustré sur les figures 1 à 5, l'ensemble du dispositif de jonction 1 constitué par les deux demi supports 4a, 4b maintenus emboîtés en contact l'un contre l'autre par la sangle 15 et coiffés par le manchon pré-expansé 5 qui les enserre, peut être enfilé sur l'un des câbles électriques 2 avant la pose du raccord de jonction ou connecteur 3. Le diamètre le plus faible des deux demi supports 4a, 4b est suffisant pour que l'ensemble puisse coulisser aisément sur le câble 2 et le raccord de jonction 3, même avec la petite surépaisseur que forme la sangle interne 15. Lors de l'utilisation, l'ensemble du dispositif 1 est déplacé en position centrée par rapport au raccord de jonction 3, puis l'utilisateur déverrouille la sangle 15 en coupant une des languettes d'extrémité, ce qui permet de dégager la sangle 15 de l'élément support formé par les demi supports 4a et 4b. Les deux demi supports étant libérés l'un de l'autre peuvent alors se déboîter et s'écarter automatiquement l'un de l'autre dans le sens des flèches 13 visibles sur la figure 7 sous l'action de la pression de rétraction du manchon 5 s'exerçant sur les demi supports 4a, 4b dont la faible conicité favorise l'expulsion en sens opposé et l'extraction.

Là encore, cette extraction des demi supports 4a, 4b est obtenue par l'effet de la poussée exercée par le manchon 5 et grâce à l'existence du film lubrifiant continu de graisse recouvrant la surface extérieure des demi supports 4a, 4b.

Comme précédemment, les deux demi supports 4a, 4b sont avantageusement réalisés sous forme de deux coquilles clipsées entre elles qui permettent d'ouvrir longitudinalement chaque demi support et le sortir du câble électrique 2. La séparation des coquilles se fait par la désolidarisation d'un accrochage mécanique ou encore par enlèvement ou rupture de matière. Comme précédemment, on peut également envisager de laisser les demi supports en place sur le câble électrique ou encore les ramener au-dessus du manchon 5 rétracté au-dessus du raccord de jonction 3 où ils peuvent assurer alors une protection mécanique complémentaire.

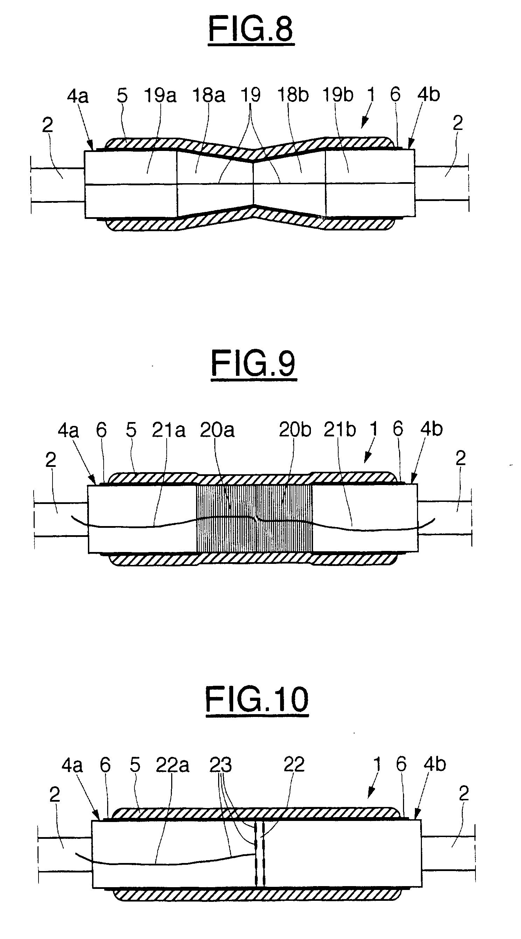

Sur la variante de la figure 8 où les pièces identiques portent les mêmes références, la seule différence par rapport aux dispositifs illustrés et décrits précédemment est la forme des deux demi supports 4a, 4b qui comportent ici une partie à faible conicité 18a, 18b au voisinage de leur bord interne et une partie de forme cylindrique 19a, 19b au voisinage de leur bord externe. D'une manière analogue au mode de réalisation de la figure 2, chaque demi support 4a, 4b est en outre constitué de deux coquilles assemblées selon deux génératrices diamétralement opposées.

On n'a pas représenté sur la figure 8 pour des raisons de simplification, de moyens permettant de maintenir les deux demi supports 4a, 4b l'un contre l'autre avant l'utilisation du dispositif. On pourra utiliser le moyen constitué par la sangle longitudinale 15 du mode de réalisation illustré sur les figures 6 et 7, ou tout autre moyen également décrit ici.

Bien que l'on ait illustré jusqu'à présent l'utilisation de deux demi supports de même dimensions, on comprendra que l'on puisse envisager selon les applications d'utiliser un demi support de longueur plus importante que l'autre.

Par ailleurs, on peut également envisager d'appliquer la présente invention à la protection d'une prise d'extrémité de câble, auquel cas un seul demi support sera utilisé, des moyens étant prévus pour l'immobiliser par rapport au manchon rétractable.

Bien que la section des demi supports illustrée sur les précédentes figures soit toujours circulaire, on comprendra que l'on puisse également selon les applications utiliser d'autres sections et en particulier une section elliptique.

Les figures 9, 10 et 11 illustrent différentes variantes de moyens de solidarisation mutuelle temporaire des deux demi supports. On comprendra que les moyens décrits dans ces variantes puissent être utilisés quelle que soit la forme des demi supports. Pour des raisons de simplification, les demi supports 4a, 4b illustrés sur les figures 9 à 11 seront de même dimension et de forme cylindrique.

Dans la variante de la figure 9, chaque demi support 4a, 4b comprend, au voisinage de son bord interne, une portion 20a, 20b déchirable par traction sur un lien 21a, 21b qui s'étend depuis la portion déchirable 20a, 20b jusqu'à l'extérieur du demi support correspondant 4a, 4b. Chaque portion déchirable 20a, 20b est par exemple constituée d'une bandelette enroulée en hélice, l'extrémité interne de cet enroulement, c'est-à-dire vers le centre de la jonction, se prolongeant à l'intérieur du demi-support correspondant 4a, 4b sous la forme du lien 21a, 21b. De plus, la surface extérieure de la portion déchirable 20a, 20b est, au moins sur une partie, dénuée de film lubrifiant. De cette manière, le manchon rétractable 5 vient en contact étroit avec la surface extérieure des portions déchirables 20a, 20b dénuées de graisse, ce qui immobilise d'une manière parfaite les deux demi supports 4a, 4b.

Lorsque l'on veut utiliser le dispositif, on agit sur les deux liens 21a, 21b, ce qui provoque le déroulement des bandelettes constituant les portions 20a, 20b. La suppression des portions 20a, 20b fait que le manchon 5 peut alors se rétracter comme précédemment décrit, sur la zone centrale du raccord de jonction 3 et provoquer comme précédemment l'extraction des demi supports 4a, 4b dont seules les surfaces lubrifiées subsistent.

Bien que dans 1a variante illustrée sur la figure 9, on ait prévu une portion déchirable dénuée de graisse sur les deux demi supports 4a, 4b, il serait également possible de ne prévoir une telle portion déchirable dénuée de graisse que sur l'un des deux demi supports 4a, 4b.

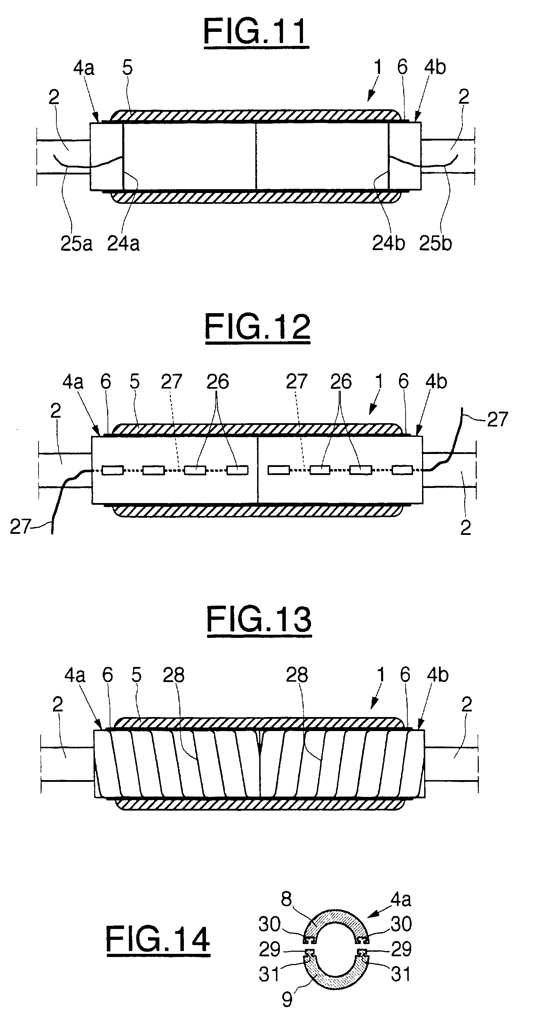

Dans la variante illustrée sur la figure 10 où les pièces identiques portent les mêmes références, les deux demi supports 4a, 4b sont rendus solidaires entre eux à l'endroit de leur bord interne par un anneau de matière continu 22 relié de manière frangible à chacun des demi supports 4a, 4b, par exemple au moyen d'une pluralité de fentes 23 ou de points de soudure. L'anneau 22 est relié par un lien 22a à l'extérieur de façon à permettre la déchirure et l'extraction de l'anneau 22. La suppression de cet anneau 22 permet alors comme précédemment au manchon 5, de commencer sa rétraction à cet endroit, ce qui provoque une poussée axiale sur les deux demi supports 4a, 4b qui sont alors extraits d'une manière automatique grâce à l'existence du film lubrifiant et sous la poussée du manchon 5.

On pourrait remplacer l'anneau 22 par une simple solidarisation des bords internes respectifs des deux demi supports 4a, 4b au moyen de soudures ponctuelles ou d'une zone frangible analogue, de façon qu'une rotation relative des deux demi supports 4a, 4b ou une traction, provoque à la fois la rupture de la zone frangible et un léger écartement relatif des deux demi supports 4a, 4b, entraînant comme précédemment leur extraction automatique.

Dans la variante de la figure 11 où les pièces identiques portent les mêmes références, chaque demi support 4a, 4b comprend une cordelette 24a, 24b placée dans une rainure autour de la circonférence du demi support correspondant 4a, 4b. Cette cordelette constitue un élément annulaire de friction en contact de frottement avec la surface intérieure du manchon 5, empêchant ainsi tout mouvement de glissement des deux demi supports 4a, 4b, lesquels, dans cette variante, ne sont pas solidarisés l'un avec l'autre.

Lors de l'utilisation, il suffit alors de retirer les cordelettes 24a, 24b en tirant sur des liens d'extraction 25a, 25b dont l'extrémité reste à l'extérieur, pour entraîner l'extraction automatique des deux demi supports 4a, 4b sous l'action de la poussée exercée sur leurs bords internes respectifs par le manchon pré-expansé 5 et ce grâce à l'existence du film lubrifiant continu présent sur la surface extérieure des deux demi supports 4a, 4b.

Les figures 12, 13 et 14 illustrent trois variantes permettant la séparation des deux demi supports 4a, 4b après leur extraction par glissement et déplacement longitudinal le long de la jonction.

Dans la variante de la figure 12, chaque demi support 4a, 4b présente le long de deux génératrices diamétralement opposées une pluralité de fentes 26 définissant ainsi deux lignes frangibles. Un lien 27, noyé dans l'épaisseur du demi support, le long de chacune de ces lignes, peut être utilisé pour faciliter la séparation en deux parties de chaque demi support 4a, 4b, par traction sur ledit lien 27.

Dans une modification possible, la séparation est obtenue à l'aide des seuls liens 27, sans que les demi supports 4a, 4b présentent des fentes 26.

Les lignes frangibles peuvent également être constituées par un simple affaiblissement de matière, par exemple une réduction d'épaisseur, remplaçant les fentes 26.

Dans la variante de la figure 13, chaque demi support 4a, 4b est pré-découpé par une incision hélicoïdale 28. Après extraction de chaque demi support 4a, 4b, il suffit alors d'exercer une traction sur une extrémité pour dérouler l'hélice et retirer ainsi les demi supports 4a, 4b des câbles électriques 2.

Dans la variante de la figure 14 où un demi support 4a a été représenté en coupe, le demi support comprend deux coques 8,9 analogues à celles de la variante illustrée sur la figure 2, celles-ci étant cependant assemblées par deux glissières longitudinales 29 en saillie le long de la coque 9 et capables de coopérer avec des évidements longitudinaux correspondants 30 sur les bords longitudinaux en regard de la coque 8. La séparation des coques 8 et 9 se fait donc par glissement ou par rupture de matière, la glissière 9 étant reliée au corps de la coque 9 par une paroi longitudinale 31 de faible épaisseur.

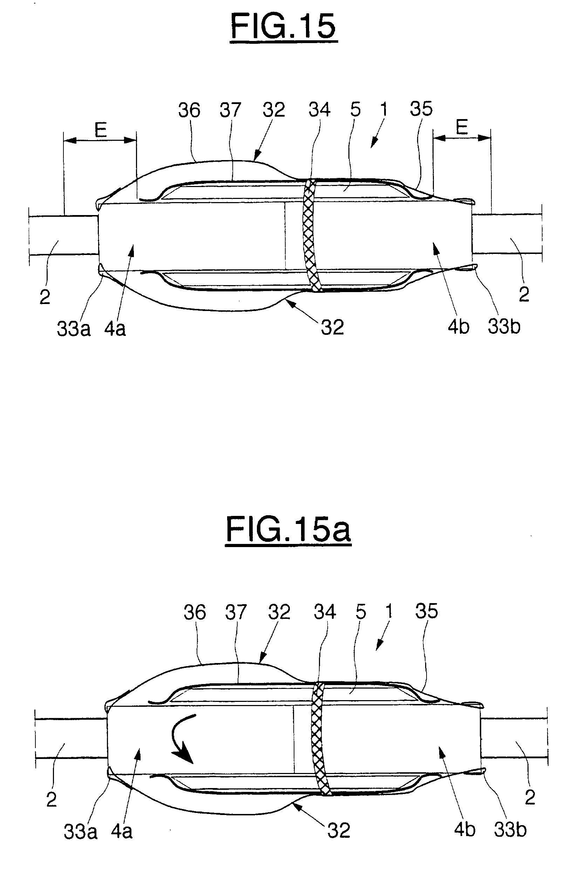

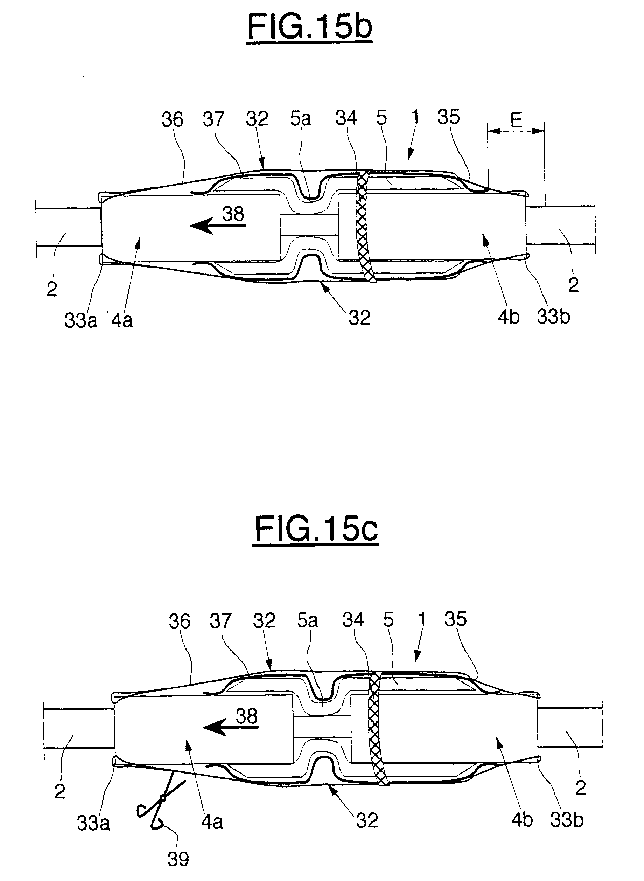

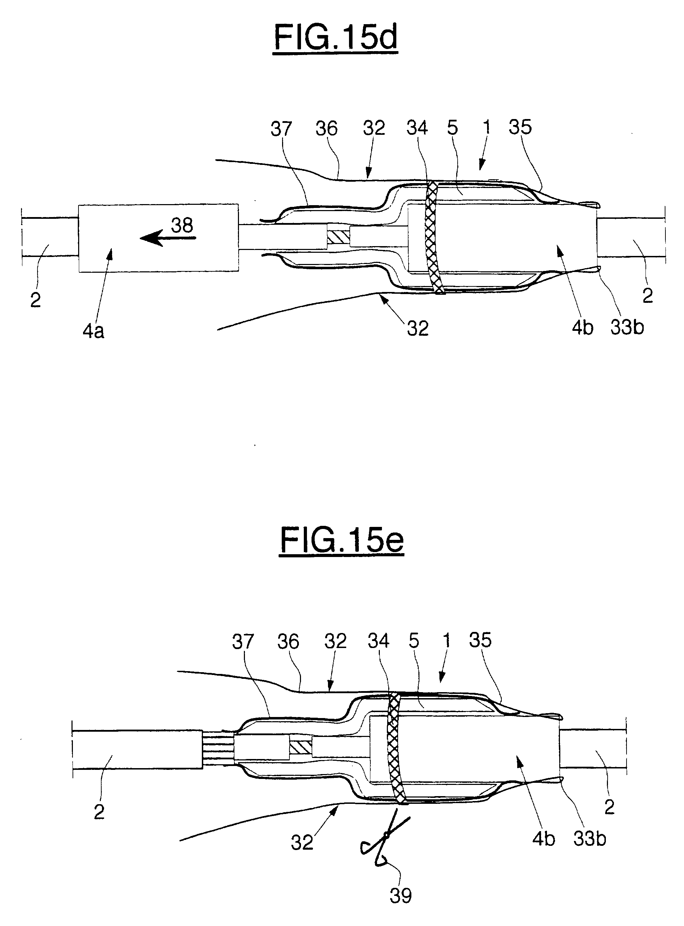

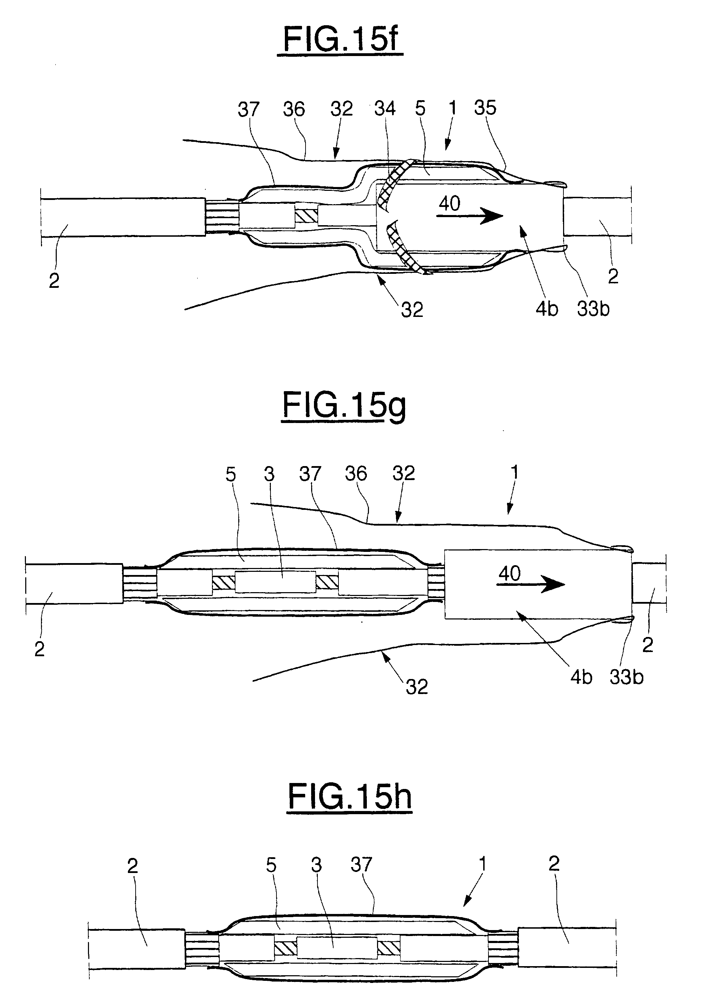

La figure 15 illustre un mode de réalisation comportant en outre des moyens permettant d'assurer un centrage précis du dispositif de l'invention par rapport au raccord de jonction. Bien entendu, ces moyens pourraient être appliqués aux différents modes de réalisation qui viennent d'être décrits et en particulier quelle que soit la structure des demi supports.

Le dispositif de jonction illustré sur la figure 15 comprend deux sangles longitudinales 32 dont les extrémités sont fixées sur les demi supports 4a, 4b au voisinage de leurs bords externes respectifs par un moyen de fixation 33a, 33b. Une sangle de bridage 34 entoure l'ensemble du dispositif et vient enserrer également les deux sangles longitudinales 32, en définissant sur chacune de celles-ci deux portions 35 et 36. La portion 35 s'étend depuis un point de fixation 33b jusqu'à un point de fixation défini par le serrage de la sangle de bridage 34. La portion 35 est tendue entre ces deux points de fixation.

L'autre portion 36 fixée entre le point de fixation 33a au voisinage du bord externe du demi support 4a et le point de fixation constitué par le serrage de la sangle de bridage 34, est de dimension plus importante et en outre n'est pas tendue entre ces deux points de fixation. On a en outre représenté schématiquement sur la figure 15 le manchon rétractable 5 ainsi qu'une housse de protection extérieure 37. Bien que cela ne soit pas représenté pour des raisons de simplification sur la figure 15, on comprendra que la surface extérieure des deux demi supports 4a, 4b est également revêtue du film lubrifiant constitué par la graisse mentionnée précédemment.

De la même manière, des moyens appropriés tels que ceux décrits dans les variantes précédentes peuvent être utilisés pour obtenir l'immobilisation des verrouillages des demi supports 4a, 4b.

On va maintenant décrire le mode d'utilisation de la variante illustrée sur la figure 15 en s'aidant des figures 15a à 15h.

Après que les deux câbles électriques à connecter aient été coupés, le dispositif de jonction 1 selon l'invention est enfilé sur l'un d'eux. Les câbles sont préparés par dénudage suivant certaines cotes des gaines de protection isolante, semi-conductrice, et de l'âme du câble électrique. Les âmes des câbles sont reliées par le connecteur 3. Le dispositif de jonction 1 de l'invention est alors centré sur la préparation des câbles, l'opérateur veillant à ce que les cotes E entre les demi supports 4a, 4b et un repère sur la gaine du câble soient identiques de chaque côté, ce qui assure un centrage précis.

Comme indiqué sur la figure 15a, l'opérateur crée alors un espace entre les deux demi supports 4a, 4b, par exemple par une rotation relative desdits demi supports comme indiqué par la flèche A sur la figure 15a. Il en résulte comme on peut le voir sur 1a figure 15b, une rétraction du manchon 5 dans l'espace ainsi créé et une action de poussée sur le demi support 4a qui se déplace alors le long du câble 2 dans le sens de la flèche 38 jusqu'à ce que les portions 36 des sangles longitudinales 32 soient tendues et le retiennent dans la position illustrée sur la figure 15b. On notera que le demi support 4b ne s'est pas déplacé car il est maintenu en position par la portion 35 des sangles longitudinales 32 fixées par la sangle de bridage 34.

L'opérateur peut alors vérifier que la cote E du côté opposé au demi support en mouvement 4a n'a pas changé depuis le début des opérations. Si ce n'est pas le cas, il peut encore corriger le centrage du dispositif.

L'opérateur libère ensuite les portions 36 des sangles longitudinales 32, par exemple en les découpant au moyen de ciseaux représentés symboliquement par la référence 39 sur la figure 15c. Le demi support 4a étant libéré s'extrait complètement. On peut alors le libérer du câble 2 par des moyens non illustrés sur la figure 15d et décrits précédemment.

L'opérateur ouvre ensuite la sangle de bridage 34, par exemple en la découpant au moyen de ciseaux 39 illustrés schématiquement sur la figure 15e. Le deuxième demi support 4b peut alors s'extraire à son tour grâce à la rétraction du manchon 5 en se déplaçant axialement dans la direction de la flèche 40 visible sur la figure 15f, et ce jusque dans la position illustrée sur la figure 15g où il peut être retiré du câble 2 comme indiqué précédemment pour le demi support 4a.

La figure 15h illustre schématiquement le dispositif selon l'invention après élimination complète des deux demi supports. On voit que la jonction est parfaitement protégée par le manchon 5 rétracté.

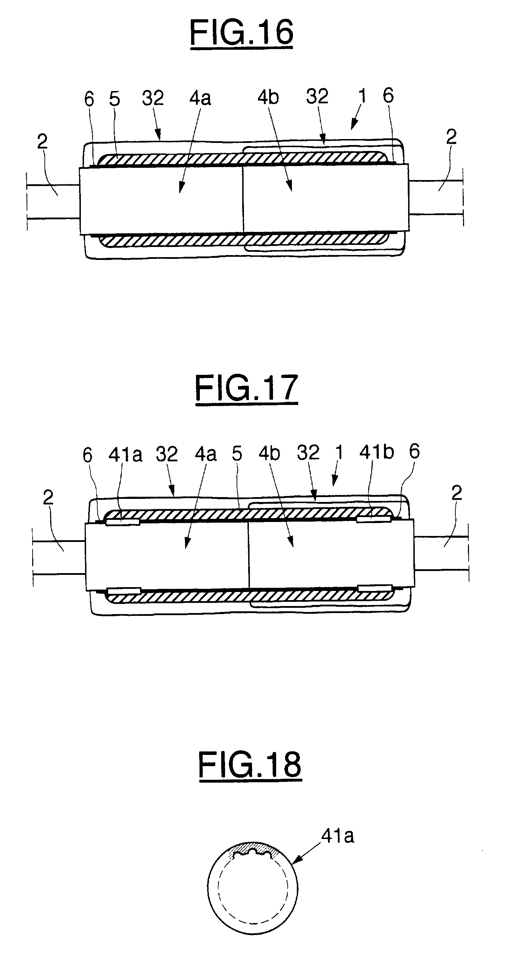

La figure 16 illustre une variante du mode de réalisation de la figure 15. Dans la variante illustrée sur la figure 16, on retrouve les deux sangles longitudinales 32 reliant entre elles les zones voisines des bords externes des deux demi supports 4a, 4b. Dans cette variante cependant, la sangle de bridage 34 est remplacée par deux sangles de renvoi 40 reliant la zone du bord externe du demi support 4b à une zone centrale du manchon rétractable 5. Lors de la mise en oeuvre de cette variante qui se fait comme indiqué précédemment sur les figures 15a à 15h, l'immobilisation temporaire du demi support 4b est obtenue par l'existence des deux sangles de renvoi 40 qui agissent d'une manière analogue à la sangle de bridage 34.

Dans la variante de la figure 17, on obtient le même effet que dans les modes de réalisation des figures 15 et 16, à l'aide de deux sangles longitudinales 32 disposées de la même manière que dans les variantes précédentes, c'est-à-dire reliant entre elles les zones des bords externes des demi supports 4a, 4b. Dans la variante illustrée sur la figure 17, une bague de verrouillage 41a, 41b, entoure chaque demi support 4a, 4b au voisinage de la portion externe du manchon rétractable 5. Chacune des bagues 41a, 41b présente, comme on peut le voir sur la figure 18, une pluralité de cannelures axiales 42, l'alésage de chaque bague 41a, 41b étant en contact avec la surface extérieure des demi supports 4a, 4b correspondants et les cannelures définissant entre elles des logements 43 pour la graisse. La surface extérieure de chacune des bagues 41a, 41b est sèche, c'est-à-dire dénuée de lubrifiant. Les bagues de verrouillage 41a, 41b empêchent donc le glissement du demi support correspondant 4a, 4b par rapport au manchon 5 et jouent ainsi le même rôle que la sangle de bridage 34 dans la variante de la figure 15 ou les sangles de renvoi 40 dans la variante de la figure 16.

## Revendications

1. Dispositif de jonction de câble électrique, comprenant au moins un élément support (4) rigide tubulaire, lubrifié sur la majeure partie de sa surface extérieure, un manchon pré-expansé (5), rétractable à froid, enserrant ledit élément support (4) sur la majeure partie de sa longueur et sur son extrémité interne, et un moyen d'immobilisation déverrouillable, maintenant ledit élément support (4) immobilisé par rapport au manchon pré-expansé (5), **caractérisé par le fait que** ledit élément support (4) est recouvert sur la majeure partie de sa surface extérieure d'une graisse non fluante sous l'action de la pression exercée par le manchon rétractable, ladite graisse étant à base de silicone ou de polyalkylèneglycol comprenant une charge dans des proportions de 15 à 45% en poids et/ou un additif de tenue à la pression choisi dans des proportions de 2 à 10% en poids.

2. Dispositif de jonction selon la revendication 1, **caractérisé par le fait que** la charge comprend du talc dans des proportions de 15 à 35% en poids.

3. Dispositif de jonction selon la revendication 1 ou 2, **caractérisé par le fait que** la charge comprend en outre jusqu'à 10% en poids de silice pyrogénée.

4. Dispositif de jonction selon l'une des revendications 1 à 3, **caractérisé par le fait que** l'additif comprend du nitrure de bore.

5. Dispositif de jonction selon l'une des revendications 1 à 4, **caractérisé par le fait que** le moyen d'immobilisation déverrouillable est tel qu'il crée une zone de frottement localisé entre l'élément support (4) et le manchon rétractable (5) et provoque, lorsqu'il est déverrouillé, une rétraction localisée du manchon au voisinage de l'extrémité interne de l'élément support, lequel est alors poussé axialement vers l'extérieur.

6. Dispositif de jonction selon l'une des revendications 1 à 5, **caractérisé par le fait qu'**il comprend deux demi supports rigides (4a, 4b) tubulaires disposés à l'intérieur du manchon pré-expansé (5) avec leurs extrémités internes en regard .

7. Dispositif de jonction selon la revendication 6, **caractérisé par le fait que** les deux demi supports sont de dimensions égales.

8. Dispositif de jonction selon la revendication 6, **caractérisé par le fait que** les deux demi supports sont de dimensions inégales.

9. Dispositif de jonction selon l'une quelconque des revendications 6 à 8, **caractérisé par le fait que** les demi supports (4a) sont de forme cylindrique et de section circulaire ou elliptique.

10. Dispositif de jonction selon l'une quelconque des revendications 6 à 8, **caractérisé par le fait que** les demi supports (4a) sont, au moins en partie, de forme conique et de section circulaire ou elliptique, la conicité étant orientée de façon telle que le diamètre du demi support soit plus faible vers l'intérieur de la jonction.

11. Dispositif de jonction selon l'une quelconque des revendications 6 à 8, **caractérisé par le fait que** le moyen d'immobilisation déverrouillable comprend un moyen de solidarisation mutuelle temporaire des deux demi supports.

12. Dispositif de jonction selon la revendication 11, **caractérisé par le fait que** le moyen de solidarisation mutuelle temporaire des deux demi supports comprend une sangle interne (15) dont les extrémités ressortent à l'extérieur par des orifices prévus dans les demi supports.

13. Dispositif de jonction selon la revendication 11, **caractérisé par le fait que** le moyen de solidarisation mutuelle temporaire des deux demi supports comprend au moins une patte (7, 11) faisant saillie depuis le bord interne d'un demi support, inclinée par rapport à l'axe du demi support et coopérant avec un évidement de forme correspondante pratiqué sur le bord interne de l'autre demi support, de façon qu'une rotation relative des demi supports (4a, 4b) l'un par rapport à l'autre entraine leur écartement.

14. Dispositif de jonction selon la revendication 11, **caractérisé par le fait que** le moyen de solidarisation mutuelle temporaire des deux demi supports est réalisé par une solidarisation frangible des bords internes des deux demi supports.

15. Dispositif de jonction selon l'une quelconque des revendications 6 à 10, **caractérisé par le fait que** l'un au moins des demi supports comprend, au voisinage de son bord interne, une portion (20a, 20b) déchirable par traction sur un lien (21a, 21b) s'étendant jusqu'à l'extérieur, la surface extérieure de cette portion déchirable étant dénuée de graisse.

16. Dispositif de jonction selon l'une quelconque des revendications 6 à 10, **caractérisé par le fait que** chaque demi support comprend un élément annulaire de friction (24a, 24b) en contact avec le manchon pré-expansé, le dit élément pouvant être extrait par traction sur un lien (25a, 25b) s'étendant jusqu'à l'extérieur .

17. Dispositif de jonction selon l'une des revendications 6 ou 7, **caractérisé par le fait qu'**il comprend un moyen supplémentaire d'immobilisation de l'un des demi supports par rapport au manchon pré-expansé, l'effet de ce moyen supplémentaire pouvant être supprimé après extraction de l'autre demi support et vérification du centrage de la jonction.

18. Dispositif de jonction selon la revendication 17, **caractérisé par le fait qu'**il comprend au mois une sangle externe longitudinale (32) reliant entre eux les bords externes des demi supports et un moyen de bridage amovible (34) fixant les dites sangles externes sur le manchon préexpansé et définissant des portions de longueur inégale sur les sangles.

19. Dispositif de jonction selon la revendication 17, **caractérisé par le fait qu'**il comprend au mois une sangle externe longitudinale (32) reliant entre eux les bords externes des demi supports et au moins une sangle de renvoi (40) fixée d'un côté au bord externe d'un demi support et de l'autre côté sur la surface extérieure du manchon pré-expansé, au voisinage du centre du dispositif de jonction.

20. Dispositif de jonction selon la revendication 17, **caractérisé par le fait qu'**il comprend au mois une sangle externe longitudinale (32) reliant entre eux les bords externes des demi supports et un moyen (41a, 41b) amovible de frottement localisé disposé sur chaque demi support et en contact direct avec le manchon rétractable.

21. Dispositif de jonction selon l'une quelconque des revendications précédentes **caractérisé par le fait que** l'élément support comporte des moyens pour le séparer du câble électrique après son extraction du manchon rétractable.

22. Dispositif de jonction selon la revendication 21, **caractérisé par le fait que** l'élément support est prédécoupé selon une incision hélicoidale.

23. Dispositif de jonction selon la revendication 21, **caractérisé par le fait que** l'élément support peut être découpé en deux parties selon une génératrice.

24. Dispositif de jonction selon la revendication 23, **caractérisé par le fait que** l'élément support présente, sur au moins une génératrice, une ou plusieurs zones de rupture frangibles.

## Patentansprüche

1. Vorrichtung zur Verbindung elektrischer Kabel, umfassend mindestens ein steifes, röhrenförmiges Stützelement, das am Hauptteil seiner äußeren Oberfläche geschmiert ist, eine vorgedehnte Hülse (5), die bei Kälte komprimierbar ist und das Stützelement (4) um den Hauptteil seiner Länge und mit seinem inneren Umriss umfasst, und ein entriegelbares Arretierelement, das das Stützelement arretiert und in Bezug auf die vorgedehnte Hülse (5) fest ist,
**dadurch gekennzeichnet, dass** das Stützelement (4) über den Hauptteil seiner äußeren Oberfläche mit einem unter der Wirkung des durch die komprimierbare Hülse aufgebrachten Drucks nicht fließenden Fett bedeckt ist, wobei das Fett auf der Basis von Silikon oder Polyalkylenglykol ist, umfassend einen Zusatz im Verhältnis von 15 bis 45 Gew.-% und/oder ein Additif mit Druckwiderstandsfähigkeit, das im Verhältnis von 2 bis 10 Gew.-% gewählt wird.

2. Vorrichtung zur Verbindung nach Anspruch 1, **dadurch gekennzeichnet, dass** der Zusatz Talg im Verhältnis von 15 bis 35 Gew.-% umfasst.

3. Vorrichtung zur Verbindung nach Anspruch 1 oder 2,
**dadurch gekennzeichnet, dass** der Zusatz darüber hinaus bis zu 10% pyrogene Kieselerde umfasst.

4. Vorrichtung zur Verbindung nach einem der Ansprüche 1 bis 3, **dadurch gekennzeichnet, dass** das Additif Bohrnitrid umfasst.

5. Vorrichtung zur Verbindung nach einem der Ansprüche 1 bis 4, **dadurch gekennzeichnet, dass** die lösbare Arretiereinrichtung eine Reibungszone erzeugt, die sich zwischen dem Stützelement (4) und der zusammenziehbaren Hülse (5) befindet, und beim Lösen eine lokale Kontraktion der Hülse in der Nachbarschaft des inneren Rands des Stützelements erzeugt, das somit axial nach außen gedrückt wird.

6. Vorrichtung zur Verbindung nach einem der Ansprüche 1 bis 5, **dadurch gekennzeichnet, dass** sie zwei steife Halbstützen (4a, 4b) umfasst, die röhrenförmig sind und im Inneren der vorgedehnten Hülse (5) angebracht sind, wobei ihre innenliegenden Enden einander gegenüber sind.

7. Vorrichtung zur Verbindung nach Anspruch 6, **dadurch gekennzeichnet, dass** die zwei Halbstützen gleiche Abmessungen haben.

8. Vorrichtung zur Verbindung nach Anspruch 6, **dadurch gekennzeichnet, dass** die zwei Halbstützen ungleiche Abmessungen haben.

9. Vorrichtung zur Verbindung nach einem der Ansprüche 6 bis 8, **dadurch gekennzeichnet, dass** die Halbstützen (4a) zylindrisch sind und einen kreisförmigen oder elliptischen Querschnitt haben.

10. Vorrichtung zur Verbindung nach einem der Ansprüche 6 bis 8, **dadurch gekennzeichnet, dass** die Halbstützen (4a) mindestens teilweise konisch sind und einen kreisförmigen oder elliptischen Querschnitt haben, wobei die Konusförmigkeit so ausgerichtet ist, dass der geringste Durchmesser der Halbstütze im Inneren der Verbindung ist.

11. Vorrichtung zur Verbindung nach einem der Ansprüche 6 bis 8, **dadurch gekennzeichnet, dass** die lösbare Arretiereinrichtung eine Einrichtung zum wechselseitigen, temporären Verbinden der zwei Halbstützen umfasst.

12. Vorrichtung zur Verbindung nach Anspruch 11, **dadurch gekennzeichnet, dass** die Einrichtung zum wechselseitigen, temporären Verbinden der zwei Halbstützen einen Innenriemen (15) umfasst, dessen Enden durch in den Halbstützen vorgesehene Öffnungen austreten.

13. Vorrichtung zur Verbindung nach Anspruch 11, **dadurch gekennzeichnet, dass** die Einrichtung zum wechselseitigen, temporären Verbinden der zwei Halbstützen mindestens einen Vorsprung (7, 11) umfasst, der in Richtung auf den inneren Rand einer Halbstütze abfällt, geneigt ist in Bezug auf die Achse der Halbstütze und mit einem Gegenstück mit entsprechender Form zusammenwirkt, das am inneren Rand der anderen Halbstütze vorgesehen ist, so dass eine Relativrotation der zwei Halbstützen (4a, 4b) deren Eingriff bewirkt.

14. Vorrichtung zur Verbindung nach Anspruch 11, **dadurch gekennzeichnet, dass** die Einrichtung zum wechselseitigen, temporären Verbinden der zwei Halbstützen durch eine zerstörbare Verbindung der inneren Ränder der zwei Halbstützen erzeugt wird.

15. Vorrichtung zur Verbindung nach einem der Ansprüche 6 bis 10, **dadurch gekennzeichnet, dass** mindestens eine der Halbstützen in der Nähe ihres inneren Randes einen Bereich (20a, 20b) umfasst, der durch Ziehen an einem Band (21a, 21b), das sich bis nach außen erstreckt, zerreissbar ist, wobei die äußere Oberfläche dieses zerreissbaren Bereichs fettlos ist.

16. Vorrichtung zur Verbindung nach einem der Ansprüche 6 bis 10, **dadurch gekennzeichnet, dass** jede Halbstütze ein ringförmiges Reibungselement (24a, 24b) in Kontakt mit der vorgedehnten Hülse umfasst, wobei dieses Element durch Ziehen an einem Band (25a, 25b), das sich bis nach außen erstreckt, herausgezogen werden kann.

17. Vorrichtung zur Verbindung nach einem der Ansprüche 6 oder 7, **dadurch gekennzeichnet, dass** sie ein zusätzliches Arretierelement von einer der Halbstützen in Bezug auf die vorgedehnte Hülse umfasst, wobei die Wirkung des zusätzlichen Arretierelements nach dem Herausziehen der anderen Halbstütze und dem Überprüfen der zentrierten Position der Verbindung aufhebbar ist.

18. Vorrichtung zur Verbindung nach Anspruch 17, **dadurch gekennzeichnet, dass** sie mindestens einen äußeren, sich in Längsrichtung erstreckenden Riemen (32) umfasst, der zwischen den zwei äußeren Rändern der Halbstützen angeschlossen ist, und ein auswechselbares Netzelement (34), das die externen Riemen an der vorgedehnten Hülse befestigt und auf dem Riemen Bereiche mit ungleicher Länge definiert.

19. Vorrichtung zur Verbindung nach Anspruch 17, **dadurch gekennzeichnet, dass** sie mindestens einen in Längsrichtung sich erstreckenden, äußeren Riemen (32) umfasst, der zwischen den äußeren Rändern der zwei Halbstützen angeschlossen ist, und mindestens einen Rückführriemen (40), der an einer Seite am äußeren Rand einer Halbstütze angebracht ist und an der anderen Seite an der äußeren Oberfläche der vorgedehnten Hülse, in der Nähe der Mitte der Verbindungsvorrichtung.

20. Vorrichtung zur Verbindung nach Anspruch 17, **dadurch gekennzeichnet, dass** sie mindestens einen externen, sich in Längsrichtung erstreckenden Riemen (32) umfasst, der zwischen den zwei äußeren Rändern der Halbstützen angeschlossen ist, und eine austauschbare Reibungseinrichtung (41a, 41b), die auf jeder Halbstütze angebracht positioniert und in direktem Kontakt mit der komprimierbaren Hülse ist.

21. Vorrichtung zur Verbindung nach einem der vorhergehenden Ansprüche, **dadurch gekennzeichnet, dass** das Stützelement eine Einrichtung umfasst, um sie von einem elektrischen Kabel nach dessen Herausziehen aus der komprimierbaren Hülse zu trennen.

22. Vorrichtung zur Verbindung nach Anspruch 21, **dadurch gekennzeichnet, dass** das Stützelement entlang eines helixförmigen Einschnitts vorgeschnitten ist.

23. Vorrichtung zur Verbindung nach Anspruch 21, **dadurch gekennzeichnet, dass** das Stützelement in zwei Teilen entlang einer Erzeugenden eingeschnitten werden kann.

24. Vorrichtung zur Verbindung nach Anspruch 23, **dadurch gekennzeichnet, dass** das Stützelement mindestens auf einer Erzeugenden eine oder mehrere zerstörbare Reisszonen umfasst.

## Claims

1. Power cable joint device, comprising at least one tubular rigid support element (4), lubricated over most of its exterior surface, a cold-shrinkable pre-expanded sleeve (5) gripping the said support element (4) over most of its length and on its internal end, and a releasable immobilizing means which keeps the said support element (4) immobilized with respect to the pre-expanded sleeve (5), **characterized in that** the said support element (4) is covered over most of its exterior surface with a grease which does not flow under the action of the pressure exerted by the shrinkable sleeve, the said grease being based on a silicone or on a polyalkylene glycol comprising a filler in proportions ranging from 15 to 45% by weight and/or a pressure-withstanding additive in proportions ranging from 2 to 10% by weight.

2. Joint device according to claim 1, **characterized in that** the filler comprises talc in proportions ranging from 15 to 35% by weight.

3. Joint device according to claim 2, **characterized in that** the filler further comprises up to 10% by weight of pyrogenated silica.

4. Joint device according to one of claims 1 to 3 **characterized in that** the additive comprises boron nitride.

5. Joint device according to any claims 1 to 4, **characterized in that** the releasable immobilizing means is such that it creates a localized friction zone between the support element (4) and the shrinkable sleeve (5) and, when it is released, causes localized shrinkage of the sleeve near the internal end of the support element, which is then thrust axially outwards.

6. Joint device according to any of claims 1 to 5, **characterized in that** it comprises two tubular rigid half-supports (4a, 4b) arranged inside the pre-expanded sleeve (5) with their internal edges facing each other.

7. Joint device according to Claim 6, **characterized in that** the dimensions of the two half-supports are the same.

8. Joint device according to Claim 6, **characterized in that** the dimensions of the two half-supports are different.

9. Joint device according to any one of Claims 3 to 5, **characterized in that** the half-supports (4a) are cylindrical, with a circular or elliptical cross-section.

10. Joint device according to any one of Claims 6 to 8, **characterized in that** the half-supports (4a) are tapered, at least partly, with a circular or elliptical cross-section, the taper being oriented in such a way that the diameter of the half-support is smaller towards the interior of the joint.

11. Joint device according to any one of Claims 6 to 8, **characterized in that** the releasable immobilizing means comprises a means for temporarily fastening the two half-supports together.

12. Joint device according to Claim 11, **characterized in that** the means for temporarily fastening the two half-supports together comprises an internal strap (15), the ends of which emerge on the outside via holes provided in the half-supports.

13. Joint device according to Claim 11, **characterized in that** the means for temporarily fastening the two half-supports together comprises at least one tab (6, 11) which projects from the internal edge of a half-support, is inclined with respect to the axis of the half-support and engages in a recess of corresponding shape cut into the internal edge of the other half-support, so that a relative rotation of the half-supports (4a, 4b) with respect to each other causes them to separate.

14. Joint device according to Claim 11, **characterized in that** the means for temporarily fastening the two half-supports together is formed by a frangible fastening of the internal edges of the two half-supports.

15. Joint device according to any one of Claims 6 to 10, **characterized in that** at least one of the half-supports includes, near its internal edge, a portion (20a, 20b) which can be torn by pulling on a tie (21a, 21b) extending as far as the outside, the exterior surface of this tearable portion being free of grease.

16. Joint device according to any one of Claims 6 to 10, **characterized in that** each half-support comprises an annular friction element (24a, 24b) in contact with the pre-expanded sleeve, it being possible for the said element to be expelled by pulling on a tie (25a, 25b) extending as far as the outside.

17. Joint device according to either of Claims 6 and 7, **characterized in that** it comprises an additional means for immobilizing one of the half-supports with respect to the pre-expanded sleeve, it being possible for the effect of this additional means to be obviated after expelling the other half-support and checking that the joint is centred.

18. Joint device according to Claim 17, **characterized in that** it includes at least one longitudinal external strap (32) connecting the external edges of the half-supports together and a removable clamping means (34) fixing the said external straps to the pre-expanded sleeve and defining portions of unequal length on the straps.

19. Joint device according to Claim 17, **characterized in that** it includes at least one longitudinal external strap (32) connecting the external edges of the half-supports together and at least one return strap (40) fixed on one side to the external edge of a half-support and on the other side to the exterior surface of the pre-expanded sleeve, near the centre of the joint device.

20. Joint device according to Claim 17, **characterized in that** it includes at least one longitudinal external strap (32) linking the external edges of the half-supports together and a removable localized-friction means (41a, 41b) placed on each half-support and in direct contact with the shrinkable sleeve.

21. Joint device according to any one of the preceding claims, **characterized in that** the support element includes means for separating it from the power cable after it has been expelled from the shrinkable sleeve.

22. Joint device according to Claim 21, **characterized in that** the support element is prescored along a helical incision.

23. Joint device according to Claim 21, **characterized in that** the support element may be cut into two parts along a generatrix.

24. Joint device according to Claim 23, **characterized in that** the support element has, along at least one generatrix, one or more frangible rupture zones.
